# EUROPEAN PATENT APPLICATION

(11) **EP 4 249 177 A1**
(43) Date of publication of application: **27.09.2023**
(21) Application number: 22163566.7
(22) Date of filing: 22.03.2022
(51) Int. Cl.: B25J 9/16

(54) **GRASP BOUNDARY DETECTION BASED ON COLOR**

(71) Applicant: Siemens Aktiengesellschaft, 80333 München (DE)
(72) Inventor: UGALDE DIAZ, Ines, Redwood City, CA 94061 (US); SOLOWJOW, Eugen, Berkeley, CA 94709 (US); SHAHAPURKAR, Yash, Berkeley, CA 94704 (US); ERDOGAN, Husnu Melih, Portland, OR 97210 (US); MOURA CIRILO ROCHA, Eduardo, Albany, CA 94706 (US)
(74) Representative: Horn Kleimann Waitzhofer Patentanwälte PartG mbB

(57) **Abstract**

It is recognized herein that current approaches to robotic bin picking based on depth images can introduce technical issues, for example issues related to identifying grasp points of particular objects in bins. Based on color images of a given bin having a group of objects, grasp point identification can be performed on objects that are packed in such a manner that a depth image might not detect accurate boundaries associated with particular objects in the group.

## Description

### BACKGROUND

Robotics is a powerful tool for automating tasks inside and outside of the factory setting. Autonomous operations in dynamic environments may be applied to mass customization (e.g., high-mix, low-volume manufacturing), on-demand flexible manufacturing processes in smart factories, warehouse automation in smart stores, automated deliveries from distribution centers in smart logistics, and the like. In order to perform autonomous operations, such as grasping and manipulation, robots may learn skills through exploring the environment. In doing so, some autonomous machines (e.g., robots) do not need to be programmed with detailed instructions that include robotic waypoints or specific tasks.

An example task that can be performed by autonomous machines is robotic bin picking. Traditional robotic bin picking relies on a teach-based approach, in which operators can predefine the robot poses for pick and drop positions. Current approaches to robotic bin picking can use camera systems, for instance camera systems that include a depth camera, to collect images of a given bin having objects for picking. The image can be processed by computer vision algorithms or deep neural networks that have been trained to compute grasping points. Often such algorithms and deep neural networks rely on the depth channel of a given camera frame because the algorithms and deep neural networks can be trained on synthetically generated data. Camera depth input is well-suited for training applications because depth images can be rendered from 3D models of objects for synthetic dataset generation.

It is recognized herein, however, that current approaches to robotic bin picking based on depth images can introduce technical issues, for example issues related to identifying grasp points of particular objects in bins.

### BRIEF SUMMARY

Embodiments of the invention address and overcome one or more of the described-herein shortcomings or technical problems by providing methods, systems, and apparatuses for identifying grasp points of objects. In particular, based on color images of a given bin having a group of objects, grasp point identification can be performed on objects that are packed in such a manner that a depth image might not detect accurate boundaries associated with particular objects in the group.

In an example aspect, an autonomous system includes a robot defining an end effector configured to grasp a plurality of objects within a physical environment. The system further includes a depth camera configured to capture a depth image of the objects within the physical environment, and a color camera configured to capture a color image of the objects within the physical environment. The system further includes one or more processors and a memory storing instructions that, when executed by the one or more processors, cause the autonomous system to perform various operations. For example, based on the depth image, the system can determine a plurality of grasp points on the objects. Each of the grasp points can represent a respective location on at least one of the objects at which the end effector can grasp the at least one of the objects. Further, based on the depth image, the system can determine that a first grasp point of the plurality of grasp points is more likely to result in a stable grasp than the other grasp points in the plurality of grasp points. Based on the color image, the system can determine that the first grasp point defines an invalid grasp point. The system can further select a second grasp point of the plurality of grasp points, and the end effector can grasp one of the objects at the second grasp point.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 shows an example system that includes an autonomous machine in an example physical environment that includes various objects positioned for picking and placing operations, in accordance with an example embodiment.
FIG. 2A is a perspective view of one of the example objects illustrated in FIG. 1.
FIG. 2B is a block diagram that illustrates an example computing system of the system depicted in FIG. 1, and example operations that can be performed by the example computing system, thus the system that includes the autonomous machine depicted in FIG. 1.
FIG. 3 illustrates a computing environment within which embodiments of the disclosure may be implemented.

### DETAILED DESCRIPTION

As an initial matter, it is recognized herein that current approaches to determining grasp points on objects using algorithms and deep neural networks rely on the depth channel of a given red-green-blue depth (RGB-D) camera. Accuracy in performance of deep neural networks and other data-drive approaches is tied to the availability of vast high-quality data to train the models. The best quality data is often data captured in real-world scenarios, but such data capture is not always feasible, so datasets can be generated from synthetic depth images rendered from 3D models of objects. After a dataset is created, it can be annotated with grasp information that can be used to train grasping models. Deep neural network models and other computer vision-aided modeling can be extensively trained on this virtually endless amount of training data, so as to identify grasp points for industrial robotic bin picking, among other operations. In an example, when a depth image of a given bin having objects is captured, the model trained on the synthetic depth images can process the depth image so as to compute grasp locations or points of the objects within the image.

It is recognized herein, however, that relying on depth data to compute grasps can result in infeasible or incorrect grasp locations because, among other reasons, commercial RGB-D cameras often do not capture depth images of sufficient quality for particular applications or environments. For example, the depth data may define holes or noise as a result of lighting, reflections, and other phenomena that can impact the depth sensing capabilities of the cameras. It is further recognized herein that many depth cameras might not have sufficient resolution to resolve depth differences or identify gaps between objects, for instance boxes, which define substantially the same height and are tightly packed adjacent to one another. In particular, for example, a group of multiple objects packed in a bin can be perceived by a given depth camera to be the same distance from the camera as each other, such that the depth camera perceives the group of objects to define a single "larger object." It is further recognized herein that such perception can be particularly problematic for the prediction of a grasp, as the grasping model may infer a grasp within the perceived "larger object" without accounting for the boundaries defined by each object within the group of objects. Consequently, by way of example, the predicted grasp might be defined at the border of two tightly packed boxes, such that execution of this grasp might fail. In particular, for example, the execution of a grasp on a border or boundary by a suction gripper can fail because a vacuum seal is not achieved.

In many cases, high end depth cameras have the same issues as consumer grade cameras in terms of identifying boundaries of multiple objects (e.g., boxes) when those objects appear to a depth sensor of the camera as having a uniform height. But even if high end cameras that define high resolutions sufficiently addressed the problems, the implementation of such cameras are often cost prohibitive or otherwise infeasible, particularly in robotic systems that already include one or more RGB-D cameras. It is also recognized herein that modifying grasp computations to be based entirely on color images might not be feasible because, among other reasons, color data is not as easily rendered as depth data, such that generating the vast amounts of synthetic data from color images that is required to train various systems might be infeasible or otherwise burdensome.

In accordance with various embodiments described herein, depth-based computation models are enhanced with RGB or color input. Given a depth-based grasp computation pipeline, grasps from the pipeline can be filtered or rejected, for example, by cross-checking the grasps in the color image of the same scene as the associated depth image. As further described herein, the color image can be used to check for object boundaries and other adversarial cases for which depth-based computations are not sensitive. In particular, for example, embodiments described herein can define depth-based grasp computation models with color-based cross-checking algorithms, so as to prevent robotic grasping on boundaries defined by tightly packed objects having substantially uniform height.

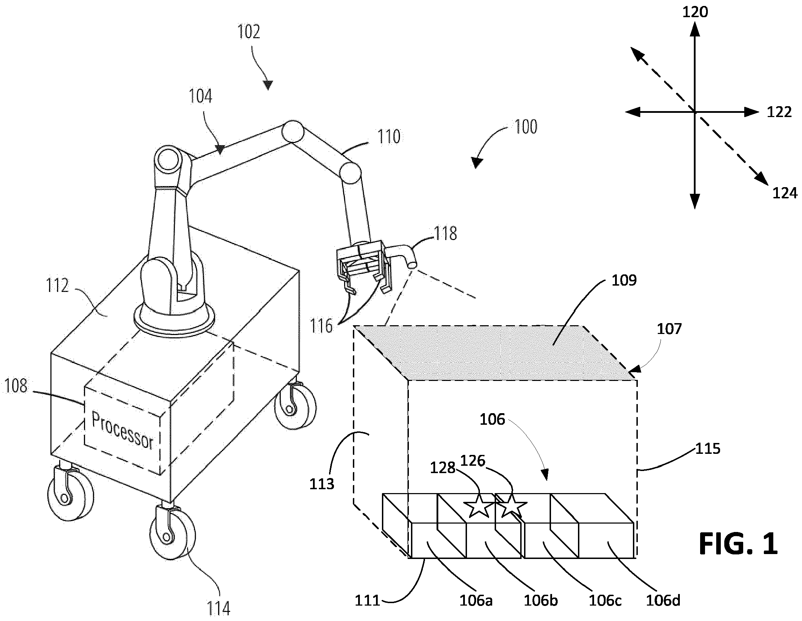

Referring now to FIG. 1, an example industrial or physical environment 100 is shown. As used herein, a physical environment can refer to any unknown or dynamic industrial environment. A reconstruction or model may define a virtual representation of the physical environment 100 or one or more objects 106 within the physical environment 100. For purposes of example, the objects 106 can be disposed in a bin or container, for instance a bin 107, so to as to be positioned for grasping. By way of example, the objects 106 can be picked from the bin 107 by one or more robots, and transported or placed in another location, for instance outside the bin 107. The example objects 106 are illustrated as rectangular objects, for instance boxes, though it will be understood that the objects 106 can be alternatively shaped or define alternative structures as desired, all such objects are contemplated as being within the scope of this disclosure.

The physical environment 100 can include a computerized autonomous system 102 configured to perform one or more manufacturing operations, such as assembly, transport, or the like. The autonomous system 102 can include one or more robot devices or autonomous machines, for instance an autonomous sewing machine or robot device 104, configured to perform one or more industrial tasks, such as bin picking, grasping, placing, or the like. The system 102 can include one or more computing processors configured to process information and control operations of the system 102, in particular the autonomous machine 104. The autonomous machine 104 can include one or more processors, for instance a processor 108, configured to process information and/or control various operations associated with the autonomous machine 104. An autonomous system for operating an autonomous machine within a physical environment can further include a memory for storing modules. The processors can further be configured to execute the modules so as to process information and generate models based on the information. It will be understood that the illustrated environment 100 and the system 102 are simplified for purposes of example. The environment 100 and the system 102 may vary as desired, and all such systems and environments are contemplated as being within the scope of this disclosure.

Still referring to FIG. 1, the autonomous machine 104 can further include a robotic arm or manipulator 110 and a base 112 configured to support the robotic manipulator 110. The base 112 can include wheels 114 or can otherwise be configured to move within the physical environment 100. The autonomous machine 104 can further include an end effector 116 attached to the robotic manipulator 110. The end effector 116 can include one or more tools configured to grasp and/or move objects 106. Example end effectors 116 include finger grippers or vacuum-based suction cups. The robotic manipulator 110 can be configured to move so as to change the position of the end effector 116, for example, so as to place or move objects 106 within the physical environment 100. The system 102 can further include one or more cameras or sensors, for instance an RGB-D camera 118, configured to detect or record objects 106 within the physical environment 100. The camera 118 can be mounted to the robotic manipulator 110 or otherwise configured to generate depth images or color images of a given scene, for instance the physical environment 100, in particular the objects 106 within the physical environment 100.

Still referring to FIG. 1, the camera 118 can be configured to capture images of the objects 106 along a first transverse direction 120. For example, the bin 107 can define a top 109 end and a bottom end 111 opposite the top end 109 along the transverse direction 120. The bin 107 can further define a first side 113 and a second side 115 opposite the first side 113 along a lateral direction 122 that is substantially perpendicular to the transverse direction 120. The objects 106 can be disposed along the lateral direction 122. In particular, for example, a first object 106a can be disposed adjacent to the first side 113, and second object 106b can be disposed adjacent to the first object 106a so as define substantially no space between the first object 106a and the second object 106b along the lateral direction 122. Similarly, for example, a third object 106c can be disposed adjacent to the second object 106b so as to define substantially no space between the second object 106b and the third object 106c along the lateral direction 122. Further, a fourth object 106d can be disposed adjacent to the second side 115 and the third object 106c, so as to define substantially no space between the third object 106c and the fourth object 106d along the lateral direction 122. It will be understood that the number of objects 106 and the arrangement of objects 106 within the bin 107 can vary as desired, and all such arrangements are contemplated as being within the scope of this disclosure.

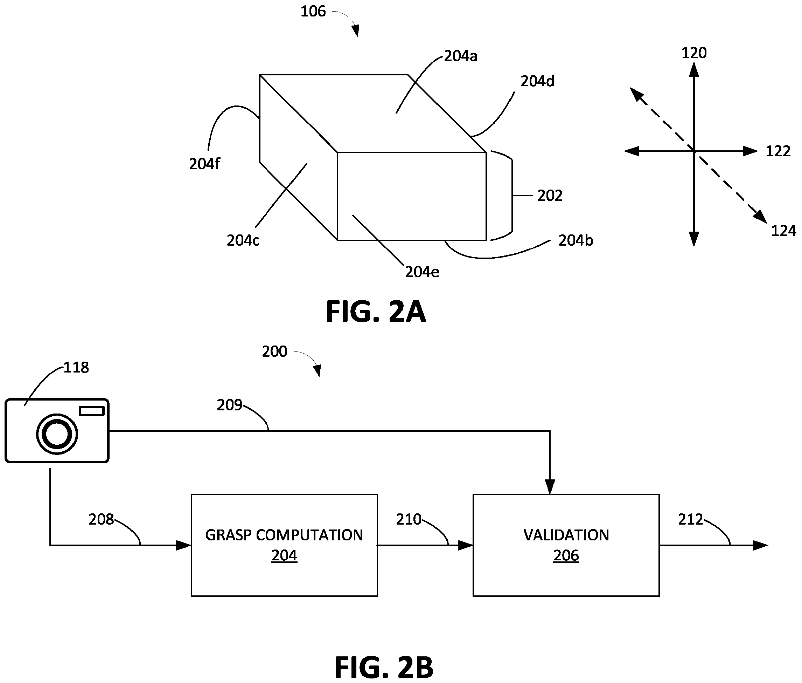

Referring also to FIG. 2A, each of the objects 106a-d can define a respective height 202 along the transverse direction 120. In particular, referring to FIG. 2, each object 106 can define a first or top surface 204a and a second or bottom surface 204b opposite the top surface 204a along the transverse direction 120. In some examples, the height 202 of the object is measured from the top surface 204a to the bottom surface 204b along the transverse direction 120, though it will be understood the objects 106 can be alternatively positioned such that the height 202 can be measured from alternative surfaces defined by the object. In various examples, the respective heights 202 defined by two or more of the objects 106, for instance all of the objects 106, is substantially equal to one another. Additionally, or alternatively, the objects 106 can be stacked or arranged so as to define respective distances from the bottom end 111 to an outermost surface along the transverse direction 120 that are substantially equal to one another. Each of the objects 106 can define a first side 204c and a second side 204d opposite the first side 204c along the lateral direction 122. Each of the objects 106 can further define a front surface 204e and a rear surface 204f opposite the front surface 204e along a longitudinal direction 124 that is substantially perpendicular to both the transverse direction 120 and the lateral direction 122.

Referring also to FIG. 2B, an example system 200 can include a single RGB-D camera, for instance the camera 118, which can be configured to generate depth images and color images of a particular scene, for instance the scene defined by the physical environment 100. Alternatively, or additionally, the example computing system 200 can include multiple cameras 118 configured to generate depth images and color images of a particular scene. The autonomous system 102 can define various computing systems, such as the computing system 200, which can include a grasp computation module 204 communicatively coupled to a grasp validation module 206. The grasp computation module 204 can define one or more neural networks configured to predict grasp locations on various objects, based on a depth image of a given object. In some cases, at 208, the grasp computation module 204 obtains a depth image of a scene, for instance a scene that includes the bin 107 containing the objects 106. Based on the depth image, the grasp computation module 204, which can define one or more neural networks, can perform various ad-hoc heuristic operations or the model-based operations, so as to compute grasps on the depth image. Thus, based on the depth image, at 210, the grasp computation module 204 can generate an output that indicates one or more grasp locations associated with grasping the one or more objects that are represented in the depth image. Such grasp locations can also be referred to as selected grasps or grasp points. In some cases, the output at 210 may include pixel coordinates, a heat map, or other indicia that distinguishes the selected grasping points in the image from other locations in the image.

Furthermore, at 210, the output of the grasp computation module 204 is received by the validation module 206. The validation module 206 can also receive a color image of the scene, at 209. Continuing with the example, the validation module 206 can receive a color image of the bin 107 containing the objects 106. Thus, the depth image that is obtained by the computation module 204 and the color image that is obtained by the validation module 206 can define the same scene as each other. Based on the output of the grasp computation module 204 and the color image received at 209, the validation module 206 can map the selected grasps in the output of the grasp computation module 204 to the received color image. In some cases, the validation module processes parameters that are intrinsic or extrinsic to the camera 118 so to translate the grasp locations associated with the depth image to grasp locations associated with the color image. For example, the RGB-D camera 118 may comprise multiple lenses spaced apart from each other a predetermined distance, so mapping the grasp locations on the depth image to the color image can be based on the predetermined distance. In some cases, the depth frame defined by the depth image can be aligned with the color frame defined by the color image by comparing pixels in each object to determine an offset between the objects. After the offset is determined, the frames can be aligned with each other and the grasp locations from the depth image can be overlayed to the color image, so as to map the grasp locations from the depth image to points or pixels on the color image. In some cases, the camera 118 can define a 3D camera that aligns depth frames with color frames, for instance using intrinsic parameters of the camera.

In another example, the computing system 200 can include a pre-processing module configured to align a color frame to the corresponding depth frame, so as to generate an aligned color frame for the grasp computation module 204. For example, the camera 118 can define different sensors for depth and color images, and the different sensors can define different viewpoints of the object 106. By translating the different viewpoints, the pre-processing module can align the depth images to the color images or the color images to the depth images. In some examples, the preprocessing can perform edge detection on the aligned color frame to detect edges defined by the bin 107, in particular the objects 106 within the bin 107. The module can further process the detected edges, for instance using thresholding, edge thinning mechanisms, or morphological reconstructing, so as to remove noise and unwanted edges. The module can further fuse the edges with the depth frame, for instance by setting the edge pixel values to the pixel value of the bottom end 111 of the bin 107, so as to define a fused frame. In the example, the fused frame can be input to the grasp computation module 204.

The validation module 206 can also detect boundaries (or edges) of the objects depicted in the color image. By way of example, the validation module 206 may include a Canny Edge Detection filter, a Hough Line detector, or the like configured to detect contours or otherwise identify boundaries of objects based on color images of the objects. In some examples, the validation module 206 performs boundary detection using a machine learning model. Such a model can be trained on labeled datasets that include color images and label images. The dataset can be generated syntactically or manually. Inputs for the model can include color frames. The trained model can output a frame with edges, for instance only edges. In some cases, the validation module 206 includes one or more neural networks configured to predict or detect boundaries of objects. At 212, based on the received color image and the output from the grasp computation module 204, the validation module 206 can generate an output that indicates whether the grasp locations selected by the grasp computation module 204 are valid. In particular, in some cases, the validation module 206 generates a bounding box around each object 106 that it identifies on the received color image. In some examples, the validation module 206 includes a trained neural network that detects the objects and generates tight bounding boxes around each detected object, such that the perimeter defined by the bounding box is within a predetermined tolerance of, or coincides with, respective boundaries defined by the object 106. Alternatively, or additionally, the validation module 206 can define an Instance Segmentation Neural Network configured to identify boundaries of objects.

After the object boundaries are detected or bounding boxes corresponding to the boundaries are generated, the validation module 206 can compare the selected grasps to the bounding boxes, and thus the boundaries. In some cases, the validation module 206 can determine the shortest distance from a selected grasp point to a point on the boundary of an object. In various examples, when the determined distance is less than a predetermined tolerance, the validation module 206 can reject the grasp point as a valid grasp point. Rejecting the grasp point can remove the grasp from possible grasp points for a given robot, such that the robot 104 does not grasp the object at the rejected grasp point. Similarly, in various examples, when the determined distance is less than a predetermined tolerance, the validation module 206 can validate the grasp point as a valid grasp point. The validation module 206 can send an indication of the valid grasp point to the robot 104, such that that the robot 104 can proceed to grasp the associated object at the validated grasp point.

By way of example, referring in particular to FIGs. 1 and 2A, the RGB-D camera 118 can be configured to measure the distance from the camera 118 to the respective surfaces of the objects 106 that are closest to the camera 118 along the transverse direction 120. In some cases, as shown in the example, the respective top surfaces 204a define the surface of each object 106 that is closest to the camera 118 along the transverse direction 120. Furthermore, in the example, the objects 106 each define the same height 202, such that the respective distances that the RGB-D camera 118 detects from each object are substantially equal to each other. It will be understood that one or more of the objects 106 may be alternatively positioned in the bin 107 such that another surface, for instance the bottom surface 204b, the first and side surfaces 204c and 204d, the front surface 204e, or the rear surface 204f define the surface that is closest to the camera 118 along the transverse direction 120. Similarly, it will be understood that various objects 106 may be alternatively shaped or positioned, for instance stacked upon each other along the transverse direction 120, such that respective distances that the RGB-D camera detects from the closest surfaces of two or more objects are substantially equal to each other.

Thus, in various example configurations, a set of two more objects 106 may be positioned such that the depth camera 118 measures the two or more objects to be substantially the same distance from the camera 118 as one another. In such configurations, by way of example, each object in the set may also be proximate to, or abut, at least one other object in the set along the lateral direction 122 or longitudinal direction 124, such that there is little or no space or gap between the respective objects along the lateral or longitudinal directions 122 and 124, respectively. In such example configurations, the depth camera 118 might not detect boundaries defined by the objects in the set. In particular, for example, the depth camera 118 might not detect a boundary or edge of an object that is adjacent to, or abuts, a boundary or edge defined by another object. Thus, the depth image that is captured at 208 might not no distinguish between two or more objects. Furthermore, when the grasp computation module 204 computes grasp locations based on the depth image, the computed grasp locations might be at or near a boundary of an object. Such grasp locations, for instance when the end effector 116 defines a vacuum-based gripper, might result in failed robotic operations. In particular, for example, when the robot 104 attempts to grasp the object 106a with a vacuum-based gripper at a location on the top surface 204a and near the second side 204d, the robot 104 might fail to create the necessary seal to life the object 106a, or the resulting grasp might fail or be otherwise unstable. In such a scenario, in accordance with an example, the validation module 206 can evaluate the grasp locations computed by the grasp computation module 204, and reject the grasp locations that are within a predetermined tolerance of the boundary of the object. The predetermined tolerance can be based on parameters associated with the object (e.g., weight, density, mass distribution, etc.) and the robot 104, for instance the end effector 116.

To illustrate further by way of example, referring to FIGs. 1 and 2A-B, the camera 118 can capture a depth image of the objects 106 in the bin 107. Because each of the first, second, third, and fourth objects 106a-d are positioned on their respective bottom surfaces 204b, such that their respective top surfaces 204a define the respective end closest to the depth camera 118, and because each of the objects 106a-d define substantially the same height 202, the depth image captured by the depth camera 118 indicates that each object 106a-d defines the same depth as each other along the transverse direction 120. Furthermore, because the objects 106a-d are packed together so as to define little or no gap between them along the lateral direction 122, the depth image captured by the depth camera 118 might indicate that the objects 106a-d define a single object. In particular, the depth image might indicate that the top surfaces 204a of the objects 106a-d define a single monolithic surface that only defines boundaries along the lateral direction 122 at the first side 204c of the first object 106a, and at the second side 204d of the fourth object 106d. Based on such a depth image, the grasp computation module 204 might compute and select a grasp point 126. For example, the selected grasp point 126 might define a location near the center of the single monolithic surface identified by the depth camera 118, so that a vacuum-sealed gripper could lift the apparent single object with equal weight distribution. Furthermore, the center of the single monolithic surface identified by the depth camera might be disposed at or near a boundary or edge defined by one or more of the objects 106a-d. Thus, by way of example, the selected grasp point 126 might be on or near the boundary defined between second object 106b and the third object 106c along the lateral direction 122.

The validation module 206 can receive the selected grasp point 126 in the output of the gasp computation module 204, at 210. Based on a color image of the bin 107 from a perspective defined along the transverse direction 120, the validation module 206 can identify boundaries or edges defined by each of the objects 106a-d. The validation module 206 can compare the selected grasp point 126 to the boundaries of the objects 106a-d. In particular, the validation module 206 can determine the distance from the selected grasp point 126 to one or more edges or boundaries of the objects 106 along the lateral direction. In the example, the validation module 206 can determine that the distance from the selected grasp point 126 to at least one of the edges or boundaries of the second object 106b or third object 106c is less than a predetermined tolerance. Based on this determination, the validation module 206 can reject the selected grasp point 126 as defining a valid grasp point. In some cases, after rejecting the selected grasp point 126, the validation module 206 can send an indication to the grasp computation module 204. In an example, based on the indication, the grasp computation module 204 can compute a new grasp point. In some cases, the indication includes the boundaries identified by the validation module 206, based on the associated color image. Thus, in some examples, the grasp computation module 204 can compute and select new grasp points based on the depth image and the object boundaries.

Alternatively, or additionally, in some examples, the grasp computation module 204 computes a plurality of grasp points based on the depth image captured by the camera 118. The grasp computation module 204 can predict the likelihood of success associated with each grasp point, and rank each grasp point based on the likelihood of success. In particular, for example, the grasp computation module 204 can determine that the selected grasp point 126 has the highest likelihood of success, and can determine that a second grasp point 128 has the second highest likelihood of success. Thus, in some cases, after the validation module 206 rejects the selected grasp point 126, the validation module 206 can evaluate the second grasp point 128. In particular, the validation module 206 can determine that the distance from the second grasp point 128 to each of the edges or boundaries of the objects 106a-d is greater than a predetermined tolerance. Based on this determination, the validation module 206 can validate the second grasp point 128 as defining a valid grasp point. When the validation module 206 validates a grasp point, for instance the second grasp point 128, the validation module 206 can send an indication or instructions to the autonomous machine 104. The indication or instructions can include the validated grasp point, for instance the second grasp point 128, so that the autonomous machine 104 can proceed to grasp the object 106b that defines the second grasp point 128.

It will be understood that although the transverse direction 120 is illustrated as downward and upward for purposes of example, the transverse direction can define alternative directions as desired, such as side to side or angled with respect to an upward/downward direction, and all such directions are contemplated as being within the scope of this disclosure.

Thus, as described herein, an autonomous system can include a robot defining an end effector configured to grasp a plurality of objects within a physical environment. The autonomous system can further include a depth camera configured to capture a depth image of the objects within the physical environment, and a color camera configured to capture a color image of the objects within the physical environment. Further still, the autonomous system can define one or more processors, and a memory storing instructions that, when executed by the one or more processors, cause the autonomous system to perform various operations. For example, based on the depth image, the system can determine a plurality of grasp points on the objects. Each of the grasp points can be representative of a respective location on at least one of the objects at which the end effector can grasp the at least one of the objects. Furthermore, based on the depth image, the system can determine that a first grasp point of the plurality of grasp points is more likely to result in a stable grasp than the other grasp points in the plurality of grasp points. Based on the color image, the system can determine that the first grasp point defines an invalid grasp point. Thus, the system can select a second grasp point of the plurality of grasp points, wherein the end effector grasps one of the objects at the second grasp point.

In particular, based on the color image, the system can identify a plurality of boundaries defined by the plurality of objects. For example, based on the color image, the system can determine a distance from the first grasp point to a first boundary of the plurality of boundaries, wherein the first boundary is closer to the first grasp point than the other boundaries of the plurality of boundaries. The system can compare the distance to a predetermined tolerance, and determine that the distance is less than the predetermined tolerance, so as to determine that the first grasp point defines the invalid grasp point.

Additionally, or alternatively, based on the color image, the system can determine that the second grasp point defines a valid grasp point. Responsive to determining that the second grasp point defines the valid grasp point, the system can send an instruction to the robot to grasp the one object at the second grasp point. For example, based on the color image, the system can determine respective distances from the second grasp point to the plurality of boundaries, and compare the distances to a predetermined tolerance. Furthermore, the system can determine that the distances are less than the predetermined tolerance, so as to determine that the second grasp point defines the valid grasp point. In various examples, the depth camera is further configured to capture the depth image of the objects from a transverse direction, and two or more of the plurality of objects abut each other along a second direction that is substantially perpendicular to the transverse direction. Thus, the two or more objects can define a respective surface that is equidistant to the depth camera along the transverse direction.

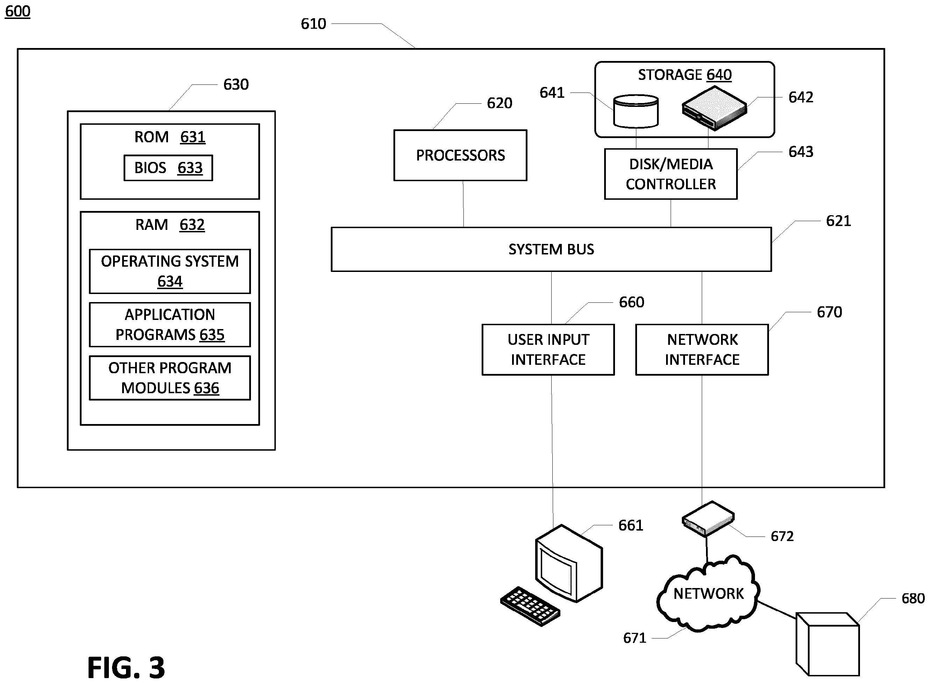

FIG. 3 illustrates an example of a computing environment within which embodiments of the present disclosure may be implemented. A computing environment 600 includes a computer system 610 that may include a communication mechanism such as a system bus 621 or other communication mechanism for communicating information within the computer system 610. The computer system 610 further includes one or more processors 620 coupled with the system bus 621 for processing the information. The autonomous system 102, in particular the computing system 200, may include, or be coupled to, the one or more processors 620.

The processors 620 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 620 may have any suitable microarchitecture design that includes any number of constituent components such as, for example, registers, multiplexers, arithmetic logic units, cache controllers for controlling read/write operations to cache memory, branch predictors, or the like. The micro architecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 621 may include at least one of a system bus, a memory bus, an address bus, or a message bus, and may permit exchange of information (e.g., data (including computer-executable code), signaling, etc.) between various components of the computer system 610. The system bus 621 may include, without limitation, a memory bus or a memory controller, a peripheral bus, an accelerated graphics port, and so forth. The system bus 621 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 3, the computer system 610 may also include a system memory 630 coupled to the system bus 621 for storing information and instructions to be executed by processors 620. The system memory 630 may include computer readable storage media in the form of volatile and/or nonvolatile memory, such as read only memory (ROM) 631 and/or random access memory (RAM) 632. The RAM 632 may include other dynamic storage device(s) (e.g., dynamic RAM, static RAM, and synchronous DRAM). The ROM 631 may include other static storage device(s) (e.g., programmable ROM, erasable PROM, and electrically erasable PROM). In addition, the system memory 630 may be used for storing temporary variables or other intermediate information during the execution of instructions by the processors 620. A basic input/output system 633 (BIOS) containing the basic routines that help to transfer information between elements within computer system 610, such as during start-up, may be stored in the ROM 631. RAM 632 may contain data and/or program modules that are immediately accessible to and/or presently being operated on by the processors 620. System memory 630 may additionally include, for example, operating system 634, application programs 635, and other program modules 636. Application programs 635 may also include a user portal for development of the application program, allowing input parameters to be entered and modified as necessary.

The operating system 634 may be loaded into the memory 630 and may provide an interface between other application software executing on the computer system 610 and hardware resources of the computer system 610. More specifically, the operating system 634 may include a set of computer-executable instructions for managing hardware resources of the computer system 610 and for providing common services to other application programs (e.g., managing memory allocation among various application programs). In certain example embodiments, the operating system 634 may control execution of one or more of the program modules depicted as being stored in the data storage 640. The operating system 634 may include any operating system now known or which may be developed in the future including, but not limited to, any server operating system, any mainframe operating system, or any other proprietary or non-proprietary operating system.

The computer system 610 may also include a disk/media controller 643 coupled to the system bus 621 to control one or more storage devices for storing information and instructions, such as a magnetic hard disk 641 and/or a removable media drive 642 (e.g., floppy disk drive, compact disc drive, tape drive, flash drive, and/or solid state drive). Storage devices 640 may be added to the computer system 610 using an appropriate device interface (e.g., a small computer system interface (SCSI), integrated device electronics (IDE), Universal Serial Bus (USB), or FireWire). Storage devices 641, 642 may be external to the computer system 610.

The computer system 610 may also include a field device interface 665 coupled to the system bus 621 to control a field device 666, such as a device used in a production line. The computer system 610 may include a user input interface or GUI 661, which may comprise one or more input devices, such as a keyboard, touchscreen, tablet and/or a pointing device, for interacting with a computer user and providing information to the processors 620.

The computer system 610 may perform a portion or all of the processing steps of embodiments of the invention in response to the processors 620 executing one or more sequences of one or more instructions contained in a memory, such as the system memory 630. Such instructions may be read into the system memory 630 from another computer readable medium of storage 640, such as the magnetic hard disk 641 or the removable media drive 642. The magnetic hard disk 641 (or solid state drive) and/or removable media drive 642 may contain one or more data stores and data files used by embodiments of the present disclosure. The data store 640 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 620 may also be employed in a multi-processing arrangement to execute the one or more sequences of instructions contained in system memory 630. In alternative embodiments, hard-wired circuitry may be used in place of or in combination with software instructions. Thus, embodiments are not limited to any specific combination of hardware circuitry and software.

As stated above, the computer system 610 may include at least one computer readable medium or memory for holding instructions programmed according to embodiments of the invention and for containing data structures, tables, records, or other data described herein. The term "computer readable medium" as used herein refers to any medium that participates in providing instructions to the processors 620 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 641 or removable media drive 642. Non-limiting examples of volatile media include dynamic memory, such as system memory 630. Non-limiting examples of transmission media include coaxial cables, copper wire, and fiber optics, including the wires that make up the system bus 621. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 600 may further include the computer system 610 operating in a networked environment using logical connections to one or more remote computers, such as remote computing device 680. The network interface 670 may enable communication, for example, with other remote devices 680 or systems and/or the storage devices 641, 642 via the network 671. Remote computing device 680 may be a personal computer (laptop or desktop), a mobile device, a server, a router, a network PC, a peer device or other common network node, and typically includes many or all of the elements described above relative to computer system 610. When used in a networking environment, computer system 610 may include modem 672 for establishing communications over a network 671, such as the Internet. Modem 672 may be connected to system bus 621 via user network interface 670, or via another appropriate mechanism.

Network 671 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 610 and other computers (e.g., remote computing device 680). The network 671 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 671.

It should be appreciated that the program modules, applications, computer-executable instructions, code, or the like depicted in FIG. 3 as being stored in the system memory 630 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 610, the remote device 680, and/or hosted on other computing device(s) accessible via one or more of the network(s) 671, may be provided to support functionality provided by the program modules, applications, or computer-executable code depicted in FIG. 3 and/or additional or alternate functionality. Further, functionality may be modularized differently such that processing described as being supported collectively by the collection of program modules depicted in FIG. 3 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 3 may be implemented, at least partially, in hardware and/or firmware across any number of devices.

It should further be appreciated that the computer system 610 may include alternate and/or additional hardware, software, or firmware components beyond those described or depicted without departing from the scope of the disclosure. More particularly, it should be appreciated that software, firmware, or hardware components depicted as forming part of the computer system 610 are merely illustrative and that some components may not be present or additional components may be provided in various embodiments. While various illustrative program modules have been depicted and described as software modules stored in system memory 630, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. An autonomous system comprising:
a robot defining an end effector configured to grasp a plurality of objects within a physical environment;
a depth camera configured to capture a depth image of the objects within the physical environment;
a color camera configured to capture a color image of the objects within the physical environment;
one or more processors; and
a memory storing instructions that, when executed by the one or more processors, cause the autonomous system to:
based on the depth image, determine a plurality of grasp points on the objects, each of the grasp points representative of a respective location on at least one of the objects at which the end effector can grasp the at least one of the objects;
based on the depth image, determine that a first grasp point of the plurality of grasp points is more likely to result in a stable grasp than the other grasp points in the plurality of grasp points;
based on the color image, determine that the first grasp point defines an invalid grasp point; and
select a second grasp point of the plurality of grasp points,
wherein the end effector grasps one of the objects at the second grasp point.

2. The autonomous system as recited in claim 1, the memory further storing instructions that, when executed by the one or more processors, cause the autonomous system to:
based on the color image, identify a plurality of boundaries defined by the plurality of objects.

3. The autonomous system as recited in claim 2, the memory further storing instructions that, when executed by the one or more processors, cause the autonomous system to:
based on the color image, determine a distance from the first grasp point to a first boundary of the plurality of boundaries, the first boundary closer to the first grasp point than the other boundaries of the plurality of boundaries;
compare the distance to a predetermined tolerance; and
determine that the distance is less than the predetermined tolerance, so as to determine that the first grasp point defines the invalid grasp point.

4. The autonomous system as recited in claim 2, the memory further storing instructions that, when executed by the one or more processors, cause the autonomous system to:
based on the color image, determine that the second grasp point defines a valid grasp point; and
responsive to determining that the second grasp point defines the valid grasp point, send an instruction to the robot to grasp the one object at the second grasp point.

5. The autonomous system as recited in claim 4, the memory further storing instructions that, when executed by the one or more processors, cause the autonomous system to:
based on the color image, determine respective distances from the second grasp point to the plurality of boundaries;
compare the distances to a predetermined tolerance; and
determine that the distances are less than the predetermined tolerance, so as to determine that the second grasp point defines the valid grasp point.

6. The autonomous system as recited in claim 1, wherein the depth camera is further configured to capture the depth image of the objects from a transverse direction, and two or more of the plurality of objects abut each other along a second direction that is substantially perpendicular to the transverse direction.

7. The autonomous system as recited in claim 6, wherein the two or more objects define a respective surface equidistant to the depth camera along the transverse direction.

8. A method comprising:
capturing, by a depth camera, a depth image of a plurality of objects within a physical environment;
capturing, by a color camera, a color image of the objects within the physical environment;
based on the depth image, determining a plurality of grasp points on the objects, each of the grasp points representative of a respective location on at least one of the objects at which an end effector can grasp the at least one of the objects;
based on the depth image, determining that a first grasp point of the plurality of grasp points is more likely to result in a stable grasp than the other grasp points in the plurality of grasp points;
based on the color image, determining that the first grasp point defines an invalid grasp point;
selecting a second grasp point of the plurality of grasp points; and the end effector grasping one of the objects at the second grasp point.

9. The method as recited claim 8, the method further comprising:
based on the color image, identifying a plurality of boundaries defined by the plurality of objects.

10. The method as recited claim 9, wherein determining that the first grasp point defines the invalid grasp point further comprises:
based on the color image, determining a distance from the first grasp point to a first boundary of the plurality of boundaries, the first boundary closer to the first grasp point than the other boundaries of the plurality of boundaries;
comparing the distance to a predetermined tolerance; and
determining that the distance is less than the predetermined tolerance.

11. The method as recited claim 9, the method further comprising:
based on the color image, determining that the second grasp point defines a valid grasp point; and
responsive to determining that the second grasp point defines the valid grasp point, sending an instruction to a robot that defines the end effector to grasp the one object at the second grasp point.

12. The method as recited claim 11, wherein determining that the second grasp point defines the valid grasp point further comprises:
based on the color image, determining respective distances from the second grasp point to the plurality of boundaries;
comparing the distances to a predetermined tolerance; and
determining that the distances are less than the predetermined tolerance.

13. The method as recited in claim 8, the method further comprising:
capturing the depth image of the objects from a transverse direction, wherein two or more of the plurality of objects abut each other along a second direction that is substantially perpendicular to the transverse direction.

14. The method as recited in claim 13, wherein the two or more objects define a respective surface equidistant to the depth camera along the transverse direction.

15. A non-transitory computer-readable storage medium including instructions that, when processed by a computing system, configure the computing system to perform the method according to any one of claims 8 to 14.
